# FASCICULE DE BREVET EUROPEEN

(11) **EP 1 381 182 B1**
(45) Date de publication et mention de la délivrance du brevet: **08.04.2015**
(21) Numéro de dépôt: 03014523.9
(22) Date de dépôt: 04.07.2003
(51) Int. Cl.: H04L 9/32

(54) **Procédé de communication entre objets**
Verfahren zur Kommunikation zwischen Vorrichtungen
Method for communicating between devices

(30) Priorité: 10.07.2002 FR 0208684
(43) Date de publication de la demande: 14.01.2004
(73) Titulaire: Somfy SAS, 74300 Cluses (FR)
(72) Inventeur: Orsat, Jean-Michel, 74300 Châtillon-Sur-Cluses (FR)
(74) Mandataire: Bugnion Genève

(56) Documents cités:
- EP-A- 1 085 481
- WO-A1-01/63954
- US-A- 5 355 413
- PATENT ABSTRACTS OF JAPAN vol. 2000, no. 23, 10 février 2001 (2001-02-10) & JP 2001 160085 A (NTT DATA CORP), 12 juin 2001 (2001-06-12)
- MENEZES A ET AL: "Handbook of Applied Cryptography , IDENTIFICATION AND ENTITY AUTHENTICATION", 1 January 1997 (1997-01-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 385 - 424, XP002262234, ISBN: 978-0-8493-8523-0

## Description

La présente invention concerne un procédé de communication entre objets comprenant chacun une mémoire dans laquelle se trouve une même application mathématique fonction de plusieurs variables et au moins une clé, et communiquant entre eux grâce à un même protocole.

Ces objets sont, par exemple, utilisés pour la gestion technique et la gestion du confort dans un bâtiment d'habitation ou dans un bâtiment commercial.

Un problème rencontré dans les réseaux de communication est la multiplicité de provenances et de fonctionnalités des produits, ceux-ci devant cependant partager les ressources d'un même réseau de communication. En effet, il est souvent nécessaire d'utiliser un mode d'adressage dit de type « Broadcast » lorsqu'on veut émettre un ordre vers l'ensemble des noeuds d'un réseau. Lorsque la communication dans le réseau se fait par ondes radioélectriques, l'effet de cette opération ne se limite pas au seul réseau concerné, mais à l'ensemble des produits répondant au même protocole et situés dans la zone de portée. Par exemple, les produits des appartements voisins seront également atteints, dans le cas d'un immeuble d'habitation.

Une telle transmission d'ordres à diffusion large ne correspond pas à une opération de sécurité. Il s'agit par exemple de la mesure de température d'un capteur. Mais, si cette opération nécessite l'envoi d'un accusé de réception, on comprend que le fait de solliciter inutilement les récepteurs d'autres réseaux risque d'engendrer un encombrement et/ou la saturation du réseau concerné.

Le réseau peut être utilisé aussi bien pour la commande d'appareils de chauffage et climatisation que pour des appareils d'éclairage, ou encore pour commander des ouvrants de ventilation, des fermetures ou des protections solaires. Ces appareils sont réalisés par différents fabricants qui ont le plus souvent intérêt à partager un même réseau de communication, pour permettre de coordonner des actions, hier indépendantes, et pour augmenter ainsi confort et économies d'énergie.

Il est en général indispensable de structurer un tel réseau, ne serait-ce que pour créer des appariements entre des objets émetteurs d'ordres et des objets récepteurs d'ordres, un même émetteur pouvant commander plusieurs récepteurs et/ou plusieurs émetteurs pouvant commander un même récepteur. Une structure arborescente peut ainsi être constituée, selon des procédés connus de l'état de la technique.

De la demande de brevet EP 1 085 481, on connaît un moyen et un procédé permettant à un émetteur maître de diffuser une clé d'authentification auprès d'autres éléments, la clé d'authentification étant commune à un groupe d'éléments commandés à distance.

En effet, le protocole de communication prévoit en général une ou plusieurs procédures d'authentification afin qu'un récepteur d'ordre obtienne la certitude que l'émetteur d'ordre dont il reçoit une commande est autorisé à le commander.

L'apparition de dispositifs bidirectionnels à faible coût incite à construire l'authentification autour d'un dialogue entre les deux unités, ceci en utilisant une procédure inviolable même en cas de réception d'une partie du dialogue par un tiers non autorisé. Ces méthodes de dialogue se sont notamment développées dans les applications de monétique.

Du brevet US 3,806,874, on connaît un tel procédé. Le principe général est de loger, dans chaque unité, un même algorithme non linéaire, utilisé pour mettre en oeuvre une procédure dite de « challenge ».

Lorsqu'un émetteur d'ordres B veut envoyer un ordre à un récepteur d'ordres A requérant l'authentification de l'émetteur, celui-ci doit apporter la preuve qu'il est autoriser à transmettre un ordre. Pour ce faire, le récepteur d'ordres A envoie à l'émetteur B un nombre NA, par exemple aléatoire. Chacune des parties calcule l'image de NA à l'aide de son algorithme. Quand le calcul est terminé, l'émetteur B transmet son résultat RB à A qui le compare à son propre résultat RA. Si RA = RB, alors le challenge est positif et l'émetteur B peut envoyer un ordre au récepteur A.

Bien entendu, ce ne sont pas des algorithmes individuels de calcul, propres à chaque lien, qui sont dupliqués dans les unités devant communiquer. Toutes les unités partagent en général le même algorithme, mais celui-ci est au moins une fonction de deux variables R(K, N) dont une des variables K est la clé commune, partagée lors de l'établissement d'un lien de communication dans une phase préalable de configuration et dont l'autre variable N est la valeur de calcul, en général aléatoire, transmise lors de chaque procédure de challenge.

Chaque procédure d'appariement nécessite ainsi le partage d'une clé d'authentification K entre deux objets.

Selon l'art antérieur, tous les objets appartenant à un même groupe partagent une même clé d'authentification, mais cette clé est normalement utilisée pour valider une pluralité de communications point à point.

Un moyen simple de s'adresser à un groupe d'objets parmi l'ensemble pour diffuser une information ou une commande vers ce groupe serait d'accompagner le message par la clé commune d'authentification. Chaque récepteur pourrait alors s'assurer que cette clé est identique à celle qu'il possède. Un récepteur pour lequel ce ne serait pas le cas saurait qu'il n'est pas concerné, et pourrait passer en mode repos. Cependant, cette solution présente un inconvénient majeur. En effet, ce procédé divulgue la clé commune ce qui fait perdre toute sécurité à l'ensemble du réseau.

On pourrait procéder de même, non pas avec la clé mais avec un identifiant de groupe, qui aurait été partagé entre tous les objets du réseau, cette fois de manière non confidentielle. Cette méthode paraît simple, mais elle présente, elle aussi, un inconvénient car elle conduit à doubler l'information confidentielle (clé) indispensable par une information publique (identifiant) et donc à augmenter les ressources de mémoire nécessaires.

On connaît aussi du document JP 20011160085 un procédé d'authentification entre une carte et un terminal faisant intervenir un hologramme.

Le but de l'invention est de fournir un procédé de communication palliant ces inconvénients. En particulier, elle se propose de fournir un procédé de communication simple et sûr permettant l'envoi d'un ordre, depuis un objet vers des objets d'un même réseau parmi l'ensemble des objets utilisant le même protocole de communication ou l'envoi d'un ordre, depuis un objet vers un groupe d'objets parmi l'ensemble des objets appartenant au réseau. L'invention a encore pour but de réaliser une installation permettant la mise en oeuvre d'un tel procédé.

Le procédé de communication selon l'invention est caractérisé par la partie caractérisante de la revendication 1.

La clé ou les clés que contient chaque objet peuvent avoir été partagées par plusieurs objets lors d'une phase préalable de configuration.

La clé ou l'une des clés que contient chaque objet peut être la même pour chaque objet ayant été fabriqué par un même constructeur ou par un même groupe de constructeurs.

L'installation pour la mise en oeuvre du procédé comprend des objets O et est caractérisée en ce que chaque objet O comprend une mémoire dans laquelle est enregistrée une même application mathématique, des moyens de communication avec les autres objets et une unité logique de traitement comprenant un programme de génération de nombres aléatoires et un programme de calcul de l'image d'une valeur par l'application.

Le dessin annexé représente, à titre d'exemple, un mode d'exécution du procédé de communication selon l'invention et le schéma d'une installation pour la mise en oeuvre de ce procédé.

La figure 1 est un schéma d'une installation permettant de mettre en oeuvre le procédé.

La figure 2 est un ordinogramme du procédé selon l'invention.

La figure 3 est un schéma représentant les informations contenues dans la trame d'un message émis par un objet communiquant selon le procédé.

La figure 4 est un schéma représentant les informations contenues dans la trame d'un message émis par un objet communiquant selon une variante du procédé.

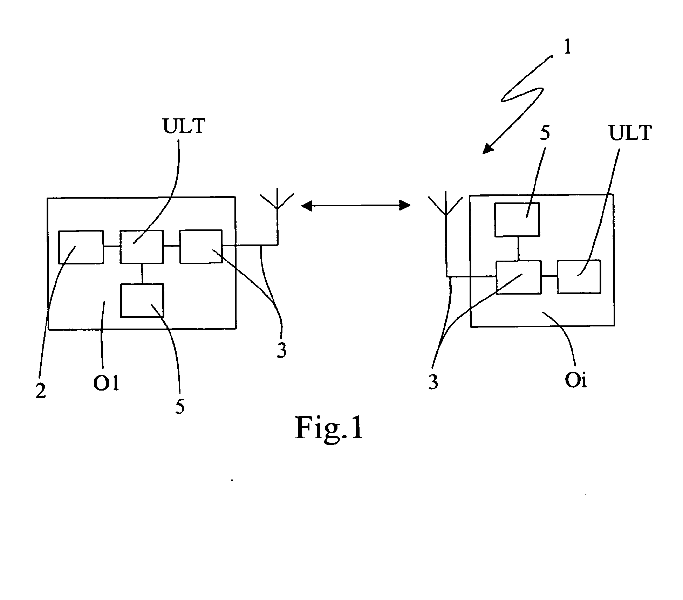

Le procédé de communication s'applique à un réseau 1 comprenant des objets O tels que représentés à la figure 1. Ces objets comprennent chacun une unité logique de traitement ULT reliée à une mémoire 5 et à des moyens de communication 3, tels que des émetteurs récepteurs de signaux radioélectriques. Certains objets peuvent en outre présenter une interface utilisateur 2 permettant à un utilisateur d'agir sur le réseau 1.

La mémoire 5 de chacun des objets contient une application mathématique F fonction de deux variables. Cette mémoire 5 est aussi destinée à contenir des clés K, c'est-à-dire des informations confidentielles. Les objets O du réseau comportent chacun des moyens de communication pouvant être unidirectionnels ou bidirectionnels.

On note Oi l'objet numéro i dans le réseau.
On note Kni la clé numéro n de l'objet Oi.

A la figure 1, représentant l'ordinogramme du procédé de communication, l'objet O1 et les objets Oi utilisent un même protocole de communication.

Les objets O1 et Oi ont respectivement en mémoire une clé K11 et K1i Cette information a été enregistrée en mémoire pendant une phase de configuration du réseau ou de fabrication des objets.

La configuration du réseau ayant été réalisée lors d'une phase préalable, on se place dans la situation où chaque objet O1, Oi active respectivement un programme 100 d'écoute du réseau.

Une action, par exemple un appui sur une combinaison de touches du clavier de l'objet O1, représentée par la flèche A1 provoque l'activation d'un programme 110 d'émission d'ordre.

Ce programme :
- génère un nombre aléatoire N1,
- calcule l'image R11 de ce nombre aléatoire N1 par l'application FK11, image de K11 par l'application F,
- provoque l'émission d'une trame TG, représentée par une flèche à la figure 1.

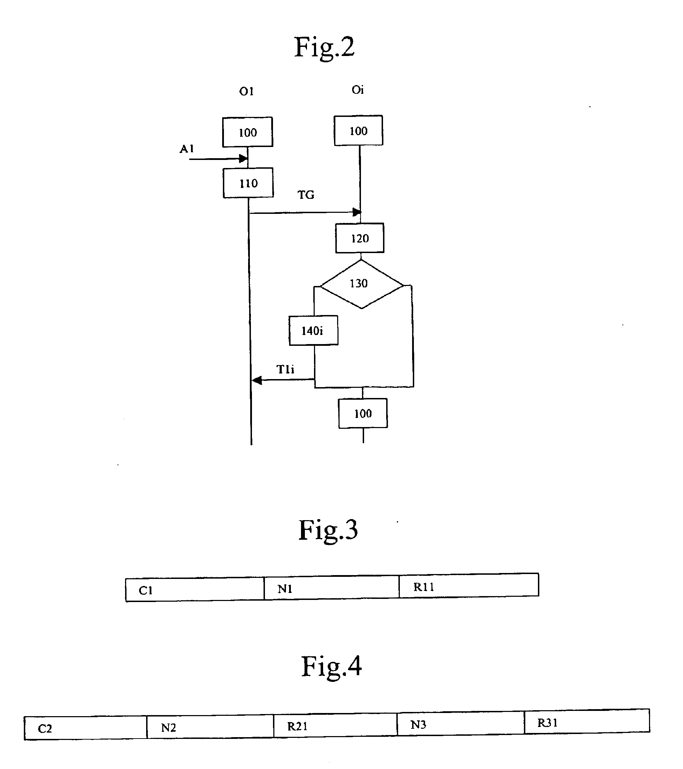

Cette trame contient, comme représentée à la figure 2, un ordre C1, le nombre aléatoire N1 généré par l'objet émetteur O1 et l'image R11 du nombre aléatoire N1 par l'application FK11.

Les autres objets Oi du réseau reçoivent la trame TG et l'analysent chacun à l'aide d'un programme 120. Dans chaque objet Oi, ce programme:
- identifie dans la trame TG les différents éléments C1, N1 et R11,
- calcule l'image R1i de ce nombre aléatoire N1 par l'application FK1i, elle-même image de K1i par l'application F.

Un programme de test 130 est ensuite activé dans chaque objet Oi. Celui-ci compare l'image R1i calculée par l'objet Oi et l'image R11 calculée par l'objet O1.

Si ces deux valeurs sont égales, un programme 140i spécifique à chaque objet Oi est activé. Ce programme permet l'exécution de l'ordre C1 par l'objet Oi. Il provoque l'envoi facultatif, vers l'objet émetteur O1 ayant émis l'ordre, d'une trame T1i d'accusé de réception puis active le programme 100 d'écoute du réseau.

Si l'image R1i calculée par l'objet Oi est différente de l'image R11 calculée par l'objet O1. L'objet Oi n'est pas concerné par l'ordre puisque son propre résultat de calcul n'est pas celui qui accompagnait la trame de diffusion et active le programme 100 d'écoute du réseau.

Pour que les objets Oi soient concernés par les ordres contenus dans les trames émises par l'objet émetteur O1, il est nécessaire que les objets Oi aient en mémoire une clé K1i égale à la clé K11 contenue en mémoire dans l'objet émetteur O1. Ces clés doivent avoir été partagées lors d'une phase préalable de configuration du réseau. Les objets ayant une même clé constituent un groupe. Les techniques de création de groupe ou de réseau parmi des objets communiquant à l'aide d'un même protocole sont connues de l'homme du métier.

Les clés peuvent aussi être enregistrées en mémoire lors de la fabrication des objets et être communes à un constructeur d'objets, voire à un groupe de constructeur d'objets.

L'invention s'applique aussi au cas où plusieurs clés Kni peuvent être connues d'un même objet Oi, du fait de son appartenance à plusieurs groupes différents. Une variante du mode d'exécution décrit consiste donc à inclure dans la trame une information sur la clé à utiliser. Dans le cas le plus simple, cette information est un numéro d'ordre.

Par exemple, si dans la trame, il est dit que le critère de diffusion de l'ordre est la clé 3, alors tous les objets Oi qui reçoivent la trame réalisent le calcul portant sur Ni avec l'application image de la clé K3i par l'application F.

Enfin, la figure 3 montre comment il est possible, dans une seule trame de diffusion, de procéder à une désignation sélective associant deux critères. Le champ contenant un ordre C2 contient un code particulier indiquant qu'il s'agit d'une diffusion multicritère, en précisant éventuellement le type ou l'ordre des clés à utiliser.

La trame contient alors au moins deux nombres générés N2, N3 par l'objet émetteur O1 et les images R21, R31 de ces nombres par les applications associées à deux clés différentes contenues dans l'objet émetteur O1.

Dans ce cas, le programme 120 doit être itéré sur le couple N2, R21 et sur le couple N3, R31 pour déterminer si l'objet est concerné par la diffusion. On peut alors utiliser des fonctions logiques conditionnant l'exécution de l'ordre transmis dans la trame. Par exemple, l'ordre sera exécuté par l'objet si l'un ou l'autre des tests est réussi ou l'ordre sera exécuté par l'objet si l'un et l'autre des tests sont réussis.

Enfin, le procédé peut s'appliquer à des transmissions cryptées. Les manipulations mathématiques ou logiques appliquées pour effectuer l'authentification peuvent être de toute nature. La clé peut être partagée en tant que telle ou sous une forme dérivée, différente dans chaque objet.

Le procédé selon l'invention est particulièrement intéressant lorsque les différents objets communiquent entre-eux à distance grâce, par exemple, à des ondes radioélectriques ou infrarouges. Cependant, le principe de l'invention peut aussi être appliqué lorsque les objets communiquent entre eux grâce à des moyens filaires.

Le procédé selon l'invention peut en particulier être utilisé pour permettre une communication entre certains équipements d'un réseau domotique assurant le confort et/ou la sécurité d'un bâtiment et des émetteurs d'ordres et/ou des capteurs permettant de commander ces équipements.

## Revendications

1. Procédé de communication entre objets appartenant à un même réseau et comprenant chacun une mémoire dans laquelle se trouve une même application mathématique (F) fonction de plusieurs variables et au moins une clé et communiquant entre eux grâce à un même protocole de communication, les objets ayant une même clé constituant un groupe, **caractérisé en ce qu'**il comprend les étapes suivantes :
- génération, par un premier objet (O1) dit émetteur, d'un nombre (N1) ou de plusieurs nombres (Nn1), par exemple aléatoires,
- calcul, dans l'émetteur (O1), de l'image (R11) de ce nombre (N1) par une application (FK11) elle-même image par l'application (F) contenue en mémoire, de la clé (K11) que contient l'émetteur (O1) ou des images (Rn1) de ces nombres (Nn1) par des applications (FKn1) elles-mêmes images par l'application (F) contenue en mémoire, des clés (Kn1) que contient l'émetteur (O1),
- émission, par l'émetteur (O1), d'une trame (TG contenant au moins un ordre (C1), le nombre (N1) généré par l'émetteur (O1) et son image (R1) ou les nombres (Nn1) générés par l'émetteur (O1) et leurs images (Rn1),
- réception de cette trame (TG), par chacun des autres objets (Oi) dits récepteurs,
- calcul, dans chaque récepteur (Oi), de l'image (R1i) du nombre (N1) généré par l'émetteur (O1) par une application (FK1i) elle-même image par l'application (F) contenue en mémoire, de la clé (K1i) que contient chaque récepteur (Oi) ou des images (Rni) de ces nombres (Nni) générés par l'émetteur (O1) par des applications (FKni) elles-mêmes images par l'application (F) contenue en mémoire, des clés (Kni) que contient chaque récepteur (Oi),
- comparaison, dans les récepteurs (Oi), de l'image (R1i) propre à chaque récepteur (Oi) à l'image (R11) propre à l'émetteur (O1), ou des images (Rni), propres à chaque récepteur (Oi) aux images (Rn1) propres à l'émetteur (O1),
- exécution de l'ordre (C1) par le ou les objets (Oi) dont l'image (R1i) est égale à l'image (R11) ou exécution de l'ordre (C1) par le ou les objets (Oi) dont les images ou certaines des images (Rni) sont égales aux images (Rn1).

2. Procédé selon la revendication 1, **caractérisé en ce que** la clé (K1i) ou les clés (Kni) que contient chaque objet (Oi) ont été partagées par plusieurs objets (Oi) lors d'une phase préalable de configuration.

3. Procédé selon la revendication 1, **caractérisé en ce que** la clé (K1i) ou l'une des clés Kni que contient chaque objet (Oi) est la même pour chaque objet (Oi) ayant été fabriqué par un même constructeur.

4. Procédé selon la revendication 1, **caractérisé en ce que** la clé (K1i) ou l'une des clés (Kni) que contient chaque objet (Oi) est la même pour chaque objet (Oi) ayant été fabriqué par un même groupe de constructeurs.

5. Installation mettant en oeuvre le procédé selon l'une des revendications précédentes, comprenant des objets (O), **caractérisée en ce que** chaque objet (O) comprend une mémoire (5) dans laquelle est enregistrée une même application mathématique (F), des moyens de communication (3) avec les autres objets et une unité logique de traitement (ULT) comprenant un programme de génération de nombres aléatoires et un programme de calcul de l'image d'une valeur par l'application (F).

## Patentansprüche

1. Verfahren zur Kommunikation zwischen Objekten, die zu einem selben Netzwerk gehören und jeweils einen Speicher umfassen, in dem sich eine selbe mathematische Applikation (F) als Funktion mehrerer Variablen und mindestens ein Schlüssel befinden und die dank eines selben Kommunikationsprotokolls miteinander kommunizieren, wobei die Objekte, die einen selben Schlüssel haben, eine Gruppe bilden, **dadurch gekennzeichnet, dass** es die folgenden Schritte umfasst:
- Generieren durch ein erstes Senderobjekt (O1) einer Ziffer (N1) oder mehrerer beispielsweise zufälliger Ziffern (Nn1),
- Berechnen, im Sender (O1), des Abbilds (R11) dieser Ziffer (N1) durch eine Applikation (FK11), selbst Abbild der im Speicher enthaltenen Applikation (F), des Schlüssels (K11), den der Sender (O1) enthält, oder der Abbilder (Rn1) dieser Ziffern (Nn1) durch Applikationen (FKn1), selbst Abbilder der im Speicher enthaltene Applikation (F), der Schlüssel (Kn1), die der Sender (O1) enthält,
- Senden, durch den Sender (O1), eines Rasters (TG), das mindestens einen Befehl (C1), die vom Sender (O1) generierte Ziffer (N1) und ihr Abbild (R1) oder die vom Sender (O1) generierten Ziffern (Nn1) und ihre Abbilder (Rn1) enthält,
- Empfangen dieses Rasters (TG) von jedem der anderen Empfängerobjekte (Oi),
- Berechnen, in jedem Empfänger (Oi), des Abbilds (R1i) der Ziffer (N1), generiert vom Sender (O1) durch eine Applikation (FK1i), selbst Abbild der im Speicher enthaltenen Applikation (F), des Schlüssels (K1i), den jeder Empfänger (Oi) enthält, oder der Abbilder (Rni) dieser Ziffern (Nni), generiert vom Sender (O1) durch Applikationen (FKni), selbst Abbilder der im Speicher enthaltene Applikation (F), der Schlüssel (Kni), die jeder Empfänger (O1) enthält,
- Vergleichen, in den Empfängern (Oi), des zu jedem Empfänger (Oi) gehörenden Abbilds (R1 i) mit dem zum Sender (O1) gehörenden Abbild (R11) oder der zu jedem Empfänger (Oi) gehörenden Abbilder (Rni) mit den zu jedem Sender (O1) gehörenden Abbildern (Rn1),
- Ausführen des Befehls (C1) durch das oder die Objekte (Oi), dessen/deren Abbild (R1 i) dem Bild (R11) entspricht, oder Ausführen des Befehls (C1) durch das oder die Objekte (Oi), dessen/deren Abbilder oder einige Abbilder (Rni) den Abbildern (Rn1) entsprechen.

2. Verfahren nach Anspruch 1, **dadurch gekennzeichnet, dass** der Schlüssel (K1i) oder die Schlüssel (Kni), den/die jedes Objekt (Oi) enthält, während einer vorherigen Konfigurationsphase von mehreren Objekten (Oi) geteilt wurden.

3. Verfahren nach Anspruch 1, **dadurch gekennzeichnet, dass** der Schlüssel (K1 i) oder einer der Schlüssel (Kni), den/die jedes Objekt (Oi) enthält, derselbe für jedes Objekt (Oi) ist, das von einem selben Hersteller hergestellt wurde.

4. Verfahren nach Anspruch 1, **dadurch gekennzeichnet, dass** der Schlüssel (K1 i) oder einer der Schlüssel (Kni), den/die jedes Objekt (Oi) enthält, derselbe für jedes Objekt (Oi) ist, das von einer selben Herstellergruppe hergestellt wurde.

5. Anlage zur Umsetzung des Verfahrens nach einem der vorangehenden Ansprüche, die Objekte (O) umfasst, **dadurch gekennzeichnet, dass** jedes Objekt (O) einen Speicher (5), in dem eine selbe mathematische Applikation (F) gespeichert ist, Kommunikationsmittel (3) mit den anderen Objekten und eine logische Verarbeitungseinheit (ULT), die ein Programm zur Generierung von zufälligen Ziffern und ein Programm zur Berechnung des Abbilds eines Werts durch die Applikation (F) umfasst, umfasst.

## Claims

1. A method of communication between objects belonging to one and the same network and each comprising a memory in which is one and the same mathematical mapping (F) dependent on several variables and at least one key and communicating among themselves by virtue of one and the same protocol, which method comprises the following steps:
- generation, by a first object (O1) the so-called transmitter, of a number (N1) or of several numbers (Nn1), for example random numbers,
- calculation, in the transmitter (O1), of the image (R11) of this number (N1) via a mapping (FK11) which is itself the image via the mapping (F) contained in memory, of the key (K11) which the transmitter (O1) contains or of the images (Rn1) of these numbers (Nn1) via mappings (FKn1) which are themselves the images via the mapping (F) contained in memory, of the keys (Kn1) which the transmitter (O1) contains,
- transmission, by the transmitter (O1), of a frame (TG) containing at least one order (C1), the number (N1) generated by the transmitter (O1) and its image (R1) or the numbers (Nn1) generated by the transmitter (O1) and their images (Rn1),
- reception of this frame (TG), by each of the other objects (Oi), the so-called receivers,
- calculation, in each receiver (Oi), of the image (R1i) of the number (N1) generated by the transmitter (O1) via a mapping (FKli) which is itself the image via the mapping (F) contained in memory, of the key (K1i) which each receiver (Oi) contains or of the images (Rni) of these numbers (Nni) generated by the transmitter (O1) via mappings (FKni) which are themselves the images via the mapping (F) contained in memory, of the keys (Kni) which each receiver (Oi) contains,
- comparison, in the receivers (Oi), of the image (R1i) specific to each receiver (Oi) with the image (R11) specific to the transmitter (O1), or of the images (Rni), specific to each receiver (Oi) with the images (Rn1) specific to the transmitter (O1),
- execution of the order (C1) by the object or objects (Oi) whose image (R1i) is equal to the image (R11) or execution of the order (C1) by the object or objects (Oi) whose images or some of whose images (Rni) are equal to the images (Rn1).

2. The method as claimed in claim 1, wherein the key (K1i) or the keys (Kni) which each object (Oi) contains have been shared by several objects (Oi) during a prior configuring phase.

3. The method as claimed in claim 1, wherein the key (K1i) or one of the keys (Kni) which each object (Oi) contains is the same for each object (Oi) which has been built by one and the same manufacturer.

4. The method as claimed in claim 1, wherein the key (K1i) or one of the keys (Kni) which each object (Oi) contains is the same for each object (Oi) which has been built by one and the same group of manufacturers.

5. An installation implementing the method as claimed in one of the preceding claims, comprising objects (0), wherein each object (0) comprises a memory (5) in which is recorded one and the same mathematical mapping (F), means of communication (3) with the other objects and a logic processing unit (ULT) comprising a program for generating random numbers and a program for calculating the image of a value via the mapping (F).
